# EUROPEAN PATENT APPLICATION

(11) **EP 0 657 199 A2**
(43) Date of publication of application: **14.06.1995**
(21) Application number: 94119314.6
(22) Date of filing: 07.12.1994
(51) Int. Cl.: B01D 35/18

(54) **Heater module for filter assembly**

(30) Priority: 13.12.1993 US 166226; 30.09.1994 US 316230
(71) Applicant: STANADYNE AUTOMOTIVE CORP., Windsor Connecticut 06095 (US)
(72) Inventor: Janik, Leon P., Suffield, Connecticut 06078 (US); Zeiner, Robert W., Torrington, Connecticut 06790 (US); Maxwell, M. Craig, Colchester, Connecticut 06415 (US); Cote, Larry L., Coventry, Connecticut 06238 (US)
(74) Representative: Glawe, Delfs, Moll & Partner

(57) **Abstract**

A heater module (10) for heating a flow of fluid employs a base member and a cap (16) molded from polymeric material, defining a cavity. First (70) and second (80) flow distributor plates composed of electrically and thermally conductive material are positioned in the cavity creating multi-tier first (37), second (66) and third (64) flow paths. A pair of PTC pills (12) mounted between the distributor plates (70,80) heat the distributor plates. The fluid is heated by contact with the PTC piles (12) and the distributor plates (70,80) as it passes through the first (37), second (66) and third (64) flow paths. A weir maintains a fluid level in the module to ensure that the PTC pills (12) are always covered by fluid. A dam splits the flow and directs it toward the PTC pills (12) after which the flow recombines.

## Description

### Background of the Invention

This invention relates generally to devices for filtering and separating liquids. More particularly, the present invention relates to filters for heating fuel of the fuel supply system or lubricating oil of an internal combustion engine and removing foreign particles and separating water therefrom.

The absence of high standards of quality control in diesel fuel supplies dictates that an effective fuel filter be incorporated into the fuel supply system of a diesel engine. It is not uncommon for diesel fuel to have significant quantities of abrasive particles and water. The abrasive particles present the potential for permanent damage to components of the fuel injection pump. The abrasive particles can also adversely affect the performance of the pump by destroying the ability of the fuel injection pump to precisely meter and deliver fuel at high pressures. The presence of water in the diesel fuel supply can cause corrosion of engine components, and during freezing conditions, can result in interruption of the fuel injection system and/or seizure of moving components. Similarly, water and particulate matter in the lubricating oil must be removed to minimize wear of engine parts.

Commonly, filters employ a disposable filter cartridge which is replaced at pre-established intervals of filter usage. The cartridge is secured to a base assembly that is fixedly mounted to the engine header or some other fixed location. A heater in the fuel path of the base warms the fuel before it enters the cartridge.

These and other filtering devices which include heating elements require positive control of the heater element, either by a relatively simple thermal switch, or by a complex electronic control system. On warm days or after sustained engine operation, substantially less heating of the fuel is required than during start-up on days when the ambient temperature is, for example, 30 degrees below zero F.

Current filter assemblies to which the invention relates tend to heat the fluid in a non-uniform manner as it flows through the base. That portion of the fluid that comes into direct or close contact with the heater may be overheated. This heated fluid releases a portion of the heat to the remaining fluid flow as the fluid streams are mixed. Incomplete mixing of the relatively heated and unheated portions of the fluid flow result in non-uniform heating of the fluid.

U.S. Patent No. 4,976,852 and U.S. Patent No. 5,084,170, which are assigned to the assignee of the present invention, disclose fuel filter assemblies to which the present invention relates. The fuel filters employ a base which mounts a disposable filter cartridge. In some disclosed embodiments, the cartridge includes a single stage filter system wherein fuel flows axially and radially to a filter element for removing particulate matter. The filter element also functions as a water barrier. Filtered fuel flows axially and exits through an outlet passage of the base. The water may be collected in a sump and periodically removed. The cartridge is secured to the base by a collar which engages against a roll seam structure of the cartridge.

### Summary of the Invention

Briefly stated, the invention in a preferred form is a heater module comprising a base member, an end-cap, first and second flow distributor plates and a plurality of PTC pills for heating the fluid flow. Base member internal structures and the flow distributor plates create a long flow path for the fluid. The PTC pills and the flow distributor plates heat the fluid over the full length of this flow path, thereby improving the heat transfer and providing a uniform heat distribution in the fluid.

The base member and the end-cap are molded from a polymeric material. The plastic material of the base member and the end-cap acts to insulate the heated fluid contained therein. The end-cap is sealed to the base member by means of a weld to provide a fluid tight connection with respect to an upper cavity of the base member. A pocket of air is generally trapped in the cavity thereby providing additional insulation against heat loss. The flow distributor plates are composed of electrical and heat conductive metal to minimize wiring requirements and to promote heating of the fuel.

The base member internal structure and the first and second flow distributor plates control the flow of fluid within the heater module. The first and second flow distributor plates divide the cavity into upper, intermediate and lower flow plenums. Fluid entering the heater module is sealed from the upper and intermediate flow plenums by an upper portion of the first flow distributor plate. A weir, spaced from the inlet passage, maintains a predetermined level of fluid in the heater module, preventing the fluid from flowing back out the inlet passage and emptying the heater module. The fluid flows through a passage defined by the weir and the first flow distributor plate into the lower flow plenum. A dam splits the fluid flow into two streams and directs each stream towards an opening in the lower portion of the first flow distributor plate. The openings have a semi-circular shape that is sized and configured to direct the split flow uniformly over a pair of PTC pills located on the top surface of the first flow distributor plate lower portion. The height of the first distributor plate lower portion is such that the PTC pills are positioned below the fluid level maintained by the weir and the stand pipe and are therefore always covered by fluid. The second flow distributor plate is spaced above the first flow distributor plate, creating the intermediate flow plenum. The recombined fluid flow exits the intermediate flow plenum via an outlet defined by edge portions of the flow distributor plates. The fluid then flows into the upper flow plenum defined by the first flow distributor plate upper section, the second flow distributor plate, and the end-cap. Finally, the fluid exits the heater module via the axial standard pipe bore .

The PTC pills provide a source of heat for warming the fluid flow. The PTC pills directly heat fluid that flows over and around them. The PTC pills also heat the fluid in the upper, intermediate and lower passages via the distributor plates. The heating of the fluid is controlled by the thermal switch and the PTC pills. The PTC pills are self-regulating. The PTC pills are composed of a ceramic material that undergoes a phase change at a predetermined transition temperature. When the PTC pills are below the transition temperature, the ceramic material conducts electricity thereby causing the PTC pills to produce heat. When the pill reaches the transition temperature, the ceramic material changes phase and current flow is significantly reduced due to a change in resistance. The thermal switch is positioned just behind the weir in the coldest part of the fluid flow. The thermal switch functions as a positive electrical shut-off switch for the pills during warm weather conditions.

The heater module is assembled with a mounting module and a disposable filter cartridge to form a filter assembly. The filter assembly is especially adapted for incorporation into the fuel supply system or lubricating oil system of an internal combustion engine, such as a diesel engine, for removing particulate matter from the fuel or oil and for separating water from the fuel or oil.

An object of the invention is to provide a new and improved heater module which may be employed in a filter assembly.

Another object of the invention is to provide a new and improved heater module for improving the heat transfer and heat distribution to the fluid traversing the module.

A further object of the invention is to provide a new and improved heater module wherein the heater control circuit is simplified, requiring less wiring and thereby reducing manufacturing costs.

Other objects and advantages of the invention will become apparent from the drawings and the specification.

### Brief Description of the Drawings

The present invention may be better understood and its numerous objects and advantages will become apparent to those skilled in the art by reference to the accompanying drawings in which:
Figure 1 is an exploded view of a heater module in accordance with the present invention;
Figure 2 is a perspective view of an alternate embodiment of the flow distributor plates and PTC pills of the heater module of Figure 1;
Figure 3 is a top plan view of the heater module base of Figure 2;
Figure 4 is a sectional view of the heater module base of Figure 3, said module base being rotated 90° to the orientation of Figure 3;
Figure 5 is an enlarged top plan view of a flow distributor plate of the heater module of Figure 1;
Figure 6 is an enlarged perspective view of another flow distributor plate for the heater module of Figure 1;
Figure 7 is a top plan view of the distributor plate of Figure 6;
Figure 8 is a sectional view of the heater module of Figure 1 assembled with a mounting module and a filter cartridge;
Figure 9 is a top plan view of an alternate embodiment of the flow distributor plate of Figure 7; and
Figure 10 is a top plan view of an alternate embodiment of the flow distributor plate of Figure 5.

### Detailed Description of the Preferred Embodiment

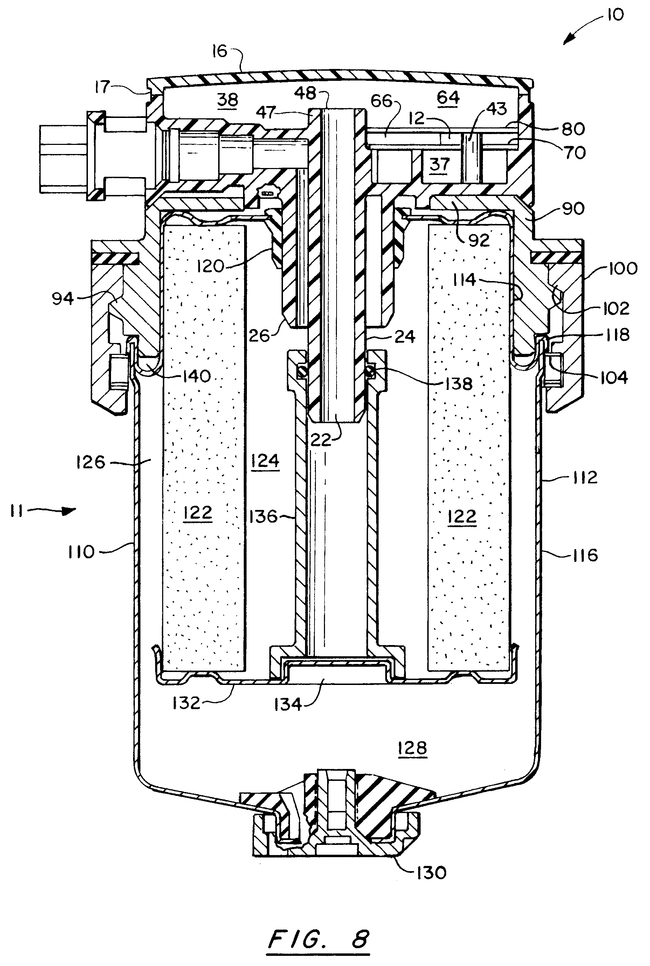

With reference to the drawings wherein like numerals represent like parts throughout the several figures, a heater module in accordance with the present invention is generally designated by the numeral 10. With reference to Figure 8, heater module 10 is assembled with a mounting module 90 and a disposable filter cartridge 110 to form a filter assembly 11.

The filter assembly 11 is especially adapted for incorporation into the fuel supply system or lubricating oil system of an internal combustion engine (not illustrated), such as a diesel engine, for removing particulate matter from the fuel or oil and for separating water from the fuel or oil. The mounting module 90 is fixedly mounted to the engine or other fixed location of the vehicle. Filter cartridge 110 is secured to the mounting module by means of a retainer collar 100.

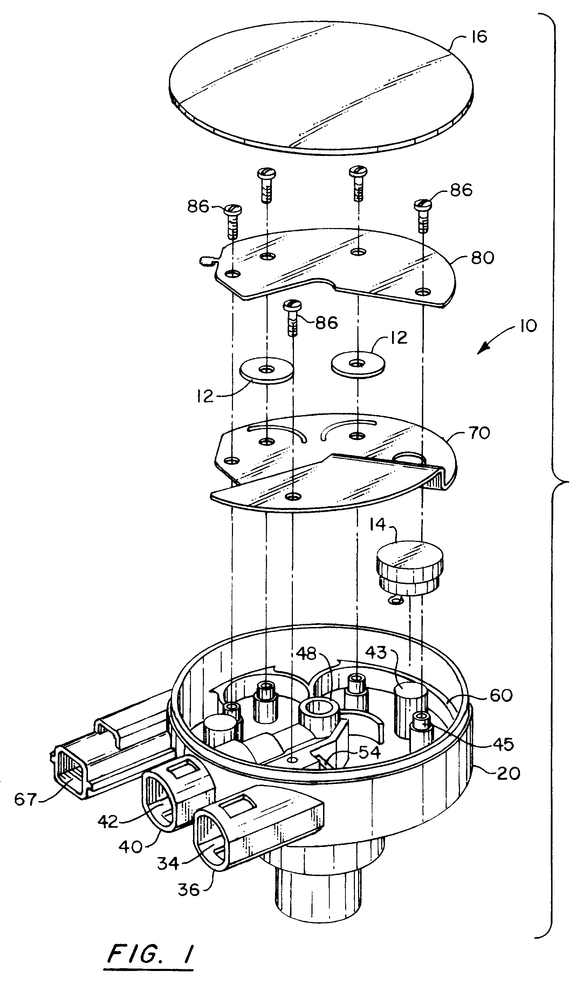

With reference to Figure 1, the heater module 10 comprises a base member 20, an end-cap 16, and first and second flow distributor plates 70, 80. The base member 20 and the end-cap 16 are precision molded from a polymeric material, for example, Valox DR-48^{TM}, Ultradur B-4300-G4^{TM}, or RTP 1103^{TM}. The flow distributor plates 70, 80 are composed of electric and heat conductive metal.

The base member 20 is an integral member which comprises an elongated sleeve-like first conduit 24 defining a central axial bore 22, an intermediate concentric sleeve-like second conduit 26 of reduced length, a coupling plate 28, a locating ring 30, and an upper circumferential lip 32. The upper lip 32 abuts the annular ring 17 (Figure 8) of end-cap 16. The end-cap 16 is sealed to the base member 20 by means of a weld to provide a fluid tight connection with respect to an upper cavity 38 of the base member 20.

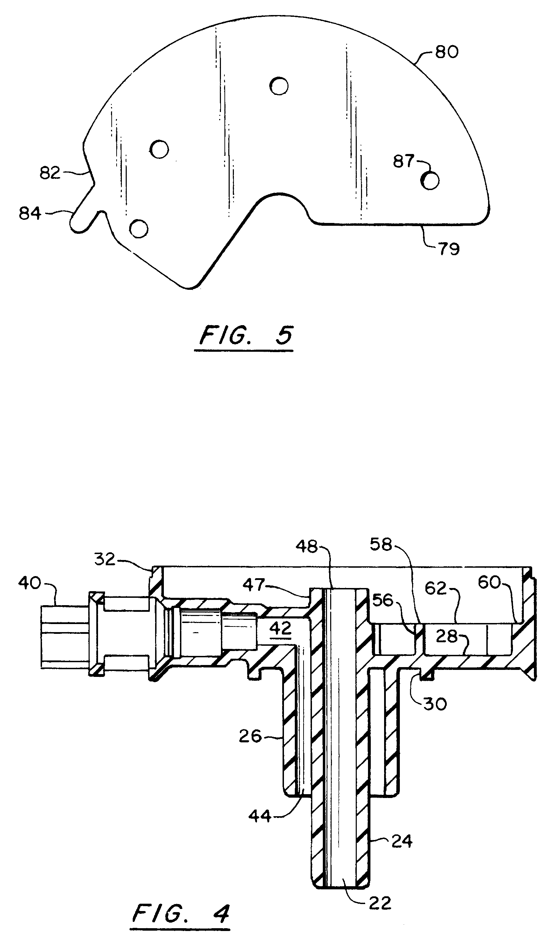

The first and second conduits 24 and 26 provide generally co-axial fluid communication between the heater module 10 and the disposable cartridge 110. An inlet passage 34 includes an inlet connector 36 at a heater module side location for connection with a supply line (not shown). The inlet passage 34 provides fluid communication via the heater module upper cavity 38, to the axial central bore 22 defined by the first conduit 24 and an integral upper stand pipe 47. An outlet connector 40 at a heater module side location connects with an outlet line (not shown) to provide fluid communication via passageway 42 from the axial fluid conduit 44 defined between the first and second conduits 24 and 26. Alternatively, the inlet connector 36 and the outlet connector 40 may be located at different locations on the heater module 10. Such location is determined by the particular design requirements and constraints of each type of vehicle. The inlet passageway 34 and outlet passageway 42 may be a stepped-bore design, (shown in Figure 4), a single bore, a tapered bore, or another design as dictated by filter design requirements, mold design requirements and material requirements.

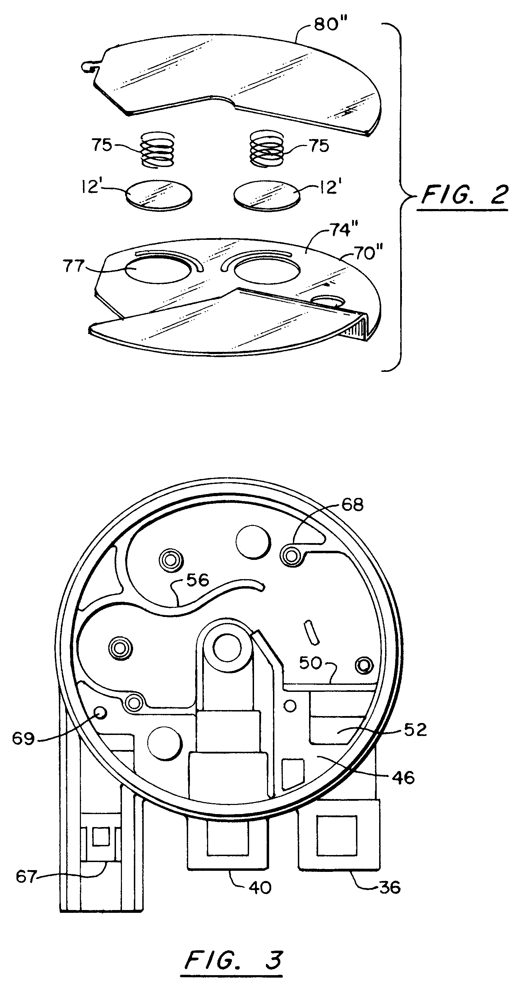

The internal structures of base member 20 and the first and second flow distributor plates 70, 80 control the flow of fluid within the heater module 10 by defining a multi-tiered flow path. A section of the inlet passageway 34 defines a first shelf 46 (Figure 3) having a top surface that is substantially coplanar with the stand pipe top surface 48. The first flow distributor plate 70 is an irregular shaped, bi-tiered structure having various openings as described below. The second flow distributor plate 80 is a planar structure as described below. The upper portion 72 of the first flow distributor plate 70 abuts the first shelf 46, sealing against fuel flow and defining a lower fuel plenum 37. Fluid entering the heater module 10 enters the lower fluid plenum 37 and flows over a weir 50 (Figure 3) positioned downstream from the outlet 52 of the inlet passageway 34. The weir 50 maintains a predetermined level of fluid in the heater module 10 and prevents the fluid from flowing back out the inlet passage 34 when the filter cartridge 110 is removed. The upper edge 54 of the weir 50 and the first flow distributor plate 70 define an orifice (not shown) for the fluid flow.

The top surface 58 of an internal dam 56 and an annular shoulder 60 define a second shelf 62. The lower portion 74 of the first flow distributor plate 70 abuts the second shelf 62, sealing against fluid flow. The dam 56, having the shape of a question mark, splits the fluid flow into two streams and directs each stream towards an opening 76 in the first flow distributor plate lower section 74. In a preferred embodiment, the openings 76 have a substantially crescent-shape that is sized and configured to direct the split flow uniformly over a pair of PTC pills 12 located on the top surface 78 of the first flow distributor plate lower portion 74. The height of the first distributor plate lower portion 74 is such that the PTC pills 12 are positioned below the fluid level maintained by the weir 50 and stand pipe 47 and are therefore always covered by fluid during service.

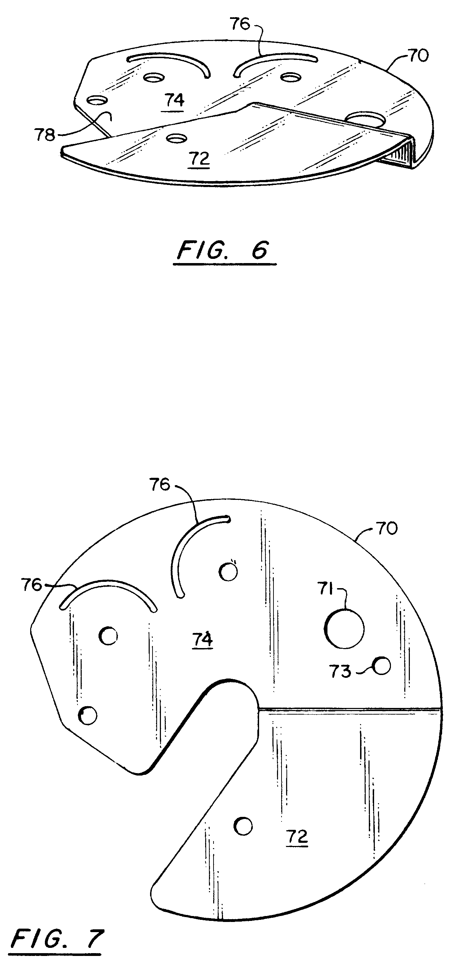

The second flow distributor plate 80 is spaced above the first flow distributor plate 70, creating an intermediate fuel plenum 66 (See Figure 8). The recombined fluid flow upwardly exits the intermediate plenum 66 via outlets defined by edge portions 79, 82 of the first and second flow distributor plates 70, 80 (Figures 7 and 5). The fluid then flows into the upper fluid plenum 64 defined by the first flow distributor plate upper section 72, the second flow distributor plate 80, and the end-cap 16 and out of the heater module via the stand pipe 47.

The PTC pills 12 (Figure 1) may be attached to the first flow distributor plate lower portion 74. The first and second flow distributor plates 70, 80 are held in place by a plurality of screws 86. Alternatively, the PTC pills 12' may be positioned in recesses 77 on the lower portion 74'' of the first flow distributor 70'' (see Figure 2). Springs 75 disposed between the second flow distributor plate 80'' and the PTC pills 12' ensure that an adequate thermal and electrical connection is maintained.

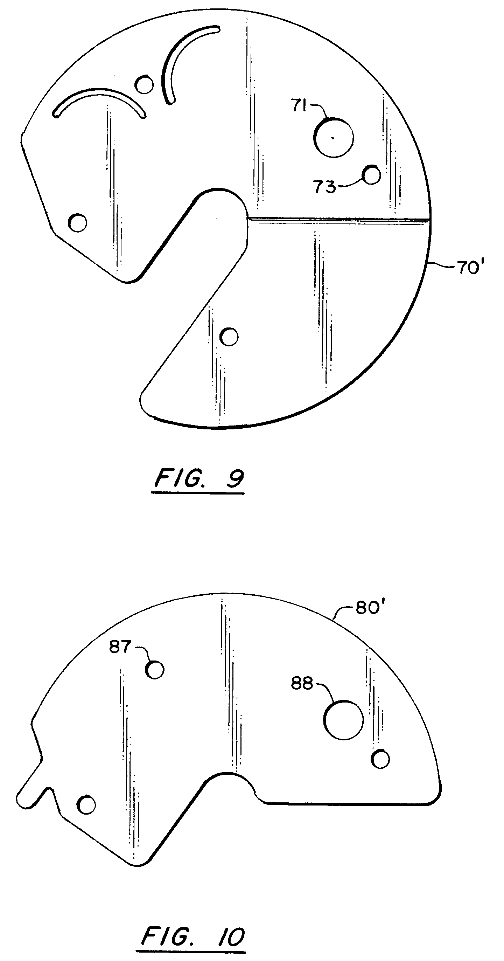

The base member 20 includes internal structure for positioning and mounting the first and second flow distributor plates 70, 80. In a first embodiment (Figures 1, 2, 6, 7, 8) positioning post 43 and mounting posts 45 (Figure 1) extend through positioning and mounting apertures 71, 73 in the first flow distributor plate 70. The second flow distributor plate 80 sits on top of the positioning and mounting posts 43, 45. The distributor plates 70, 80 are held in place by a plurality of screws 86 which extend through mounting apertures 73, 87 and engage the mounting posts 45. In a second embodiment (Figure 10), the positioning post 43 also extends through a positioning aperture 88 in the second flow distributor plate 80. As shown in Figures 9 and 10, the positioning and mounting posts 43, 45 and associated positioning and mounting apertures 71, 87, 73, 88 may be located in different positions so long as the posts 43, 45 do not interfere with fluid flow. Alternatively, the first and second flow distributor plates 70, 80 may be heat staked in place to maintain proper component alignment.

The PTC pills 12 provide a source of heat for warming the fluid flow. In a preferred embodiment, each PTC pill 12 is rated at 75 watts. The PTC pills 12 are in intimate thermal contact with the fluid and directly heat fluid that flows over and around them. The PTC pills 12 also heat the first and second flow distributor plates 70, 80. Therefore, the fluid flow is initially heated by the first flow distributor plate 70 as if flows through the lower fluid plenum 37. The fluid flow is then heated directly by the PTC pills 12 and by the first and second flow distributor plates 70, 80 as it moves through the intermediate plenum 66. The fluid flow is finally heated by the first and second flow distributor plates 70, 80 as it flows through the upper fluid plenum 64.

The thermal switch 14, first and second flow distributor plates 70, 80, and the PTC pills 12 define an electrical circuit for providing power to the PTC pills 12. An electrical connector 67 is connected to a first electrical post 68 (Figure 3) and the thermal switch 14. The thermal switch 14 is connected to a second electrical post 69. The first flow distributor plate lower portion 74 contacts the second electrical post 69. The PTC pills 12 provide the electrical path between the first flow distributor plate lower portion 74 and the second flow distributor plate 80. The second flow distributor plate 80 has a tab 84 (Figure 5) which is in contact with the first electrical post 68, completing the circuit.

The heating of the fluid is controlled by the thermal switch 14 and the PTC pills 12 which are self-regulating. The PTC pills 12 are composed of a ceramic material that undergoes a phase change at a predetermined temperature. A suitable PTC pill contains barium titinate. The PTC pills 12 will conduct electricity, producing heat, so long as the ceramic material is in the low temperature phase. When the pill reaches the predetermined temperature, the ceramic material changes phase and the electric current through the PTC pills 12 significantly decreases thereby terminating the production of heat. The thermal switch 14 is positioned just behind the weir 50 downstream from the weir and upstream from the PTC pills 12 in a relatively cold location of the fluid flow. The thermal switch 14 is preferably a bi-metal switch which comprises an internal temperature sensor and switch. The thermal switch 14 opens and closes the switch to control the flow of electricity to the PTC pills 12 and thereby controls the temperature of the fluid. The thermal switch 14 functions as a positive shut-off switch for the pills during warm weather conditions. The combination of the PTC pills 12 and the thermal switch 14 makes the heater module 10 highly responsive to temperature conditions in the fluid.

The plastic material of the base member 20 and the end-cap 16 acts to insulate the heated fuel contained therein. In addition, a pocket of air is generally trapped in the cavity 38 under the end-cap 16. This air pocket provides additional insulation against heat loss.

With reference to Figure 8, the mounting module 90, which may be cast from metal, comprises a coupling plate 92 having an aperture for receiving the first and the second conduits 24 and 26 and the locating ring 30.

The heater module 10 and mounting module 90 define an inverted cup-like receptacle having a lower receiving cavity for the upper portions of the disposable cartridge.

The disposable filter cartridge 110 comprises a can-like container 112 which is formed by a pair of lower and upper cup-like metal sections 116 and 114 which are joined along a circumferential roll seam 118. The truncated upper section 114 is a molded member which includes a central axial opening. An upper sealing grommet 120 mounted at the opening inwardly seals against the outer conduit 26. The top surface of container section 114 is contoured to form an annular recess.

A filter element 122, which has a continuous fan-shaped pleated configuration, is housed within the container 112. The filter element 122 axially extends approximately three quarters of the length of the container 112. The filter element 122 thus defines an interior axial chamber 124 and a quasi-annular outer chamber 126. The filter element 122 is affixed with resin binders or other water coalescers so that as fuel or oil passes through the filter element 122, the water coalesces to form water droplets. A water barrier may also be employed. A sump 128 is formed at the bottom of the lower section 116 to collect water which coalesces from the fuel or oil. A drain valve 130 is disposed in the lower portion 116 of the cartridge for draining the water.

The lower end of the filter element 122 is engaged by a plate 132 which has a central port 134. A tubular structure 136, coaxial to the central port 134, engages the plate 132 and extends upward a part of the length of the interior axial chamber 124. The tubular structure 136 coaxially receives a lower portion of the inner conduit 24 wherein the vertical gap between the lower end of the outer conduit 26 and the upper exterior end of the tubular structure 136 defines a passage for the flow of fuel or oil out of the filter element 122 via the axial fluid conduit 44. A lower sealing grommet 138 mounted adjacent the upper end of the tubular structure 136 inwardly seals against the inner conduit 24.

Alternatively, the disposable cartridge may comprise dual filter elements (not illustrated) having a continuous fan-shaped or other configuration.

The cartridge includes an annular recess 140. The annular recess 140 is located inwardly adjacent the roll seam 118. The retainer collar 100 includes a rim-like shoulder 104 for retentively engaging the roll seam 118. The mounting module 90 includes a pair of integral outwardly projecting, diametrically disposed ramps 94. Each of the ramps ascends in spiral-like fashion in excess of 90° around the mounting module 90. The upper ends of the ramps are beveled. Stops (not shown) are angularly spaced from the respective upper ends of the ramps 94. Spiral-like ramps 102 of the collar 100 are dimensioned and positionable for engagement with the ramps 94 and stops of the mounting module 90, so that the collar ramps 102 slideably engage and ascend the mounting module ramps 94 upon alignment and angular rotation of the collar 100. The inclination angle of the upper surfaces of the mounting module ramps 94 and the underside surfaces of the collar ramps 102 are constant and substantially equal. The upper ramp surfaces of the mounting module ramps 94 and the underside surface of the retainer collar ramps 102 engage along an extended substantially surface-to-surface interface. The locked position may be facilitated by the leading end of the collar ramps 102 engaging the stops.

## Claims

1. A heater module (10) for heating a flow of fluid, the heating module (10) having a base member (20) comprising an inlet (36, 52), a base plate (28), an outlet (40), and first (24) and second (26) conduits in fluid communication with said inlet (36) and outlet (40), respectively, characterized by the heater module (10) further comprising:
first flow distributor means (70) comprising a first plate (70), said first plate (70) being disposed above the base plate (28) to define a first flow plenum (37), said first flow plenum (37) being in fluid communication with the inlet (36), said first plate (70) defining a plurality of openings (76);
second flow distributor means (80) comprising a second plate (80), said second plate (80) being disposed above said first plate (70) to define a second flow plenum (66), said second flow plenum (66) being in fluid communication with said first flow plenum (37) via said openings (76);
heating means (12) disposed in said second plenum (66) for generating heat; and
an end-cap (16) mounted to said base member (20), said end-cap (16) and said first (70) and second (80) plates defining a third flow plenum (64), said third flow plenum (64) being in fluid communication with said second flow plenum (66) and the first conduit (24).

2. The heater module of claim 1 wherein said first (70) and second (80) plates are composed of metal, said metal being thermally and electrically conductive.

3. The heater module of claim 2 wherein said heating means (12) transfers heat to said first (70) and second (80) plates and said heating means (12) and said first (70) and second (80) plates transfer heat to fluid traversing said first (37), second (66) and third (64) plenums.

4. The heater module of claims 1-3 wherein said heating means (12) comprises a PTC pill.

5. The heater module of claim 4 wherein said PTC pill comprises a ceramic material having a structure wherein said ceramic material is highly conductive of electricity below a predetermined threshold temperature and is significantly less conductive of electricity above said threshold temperature.

6. The heater module of claims 1-5 wherein said heating means (12) and said first (70) and second (80) plates define an electrical circuit for providing electrical power to said heating means (12).

7. The heater module of claim 6 wherein said electrical circuit further comprises a thermal switch (14) disposed in said first flow plenum (37), the thermal switch (14) comprising temperature sensor means for sensing the temperature of the surrounding fluid and switch means responsive to said sensor means for selectively switching states to control the temperature of the fluid.

8. The heater module of claims 1-7 wherein said first plate (70) is a bi-tiered member comprising a first portion (72) and a second portion (74), said openings (76) being located in said second portion (74).

9. The heater module of claims 1-8 wherein each of said openings (76) has a substantially crescent-shape.

10. The heater module of claims 1-9 wherein said heating means (12) comprises a pair of PTC pills and said openings (76) comprise a pair of slots, each of said slots being positioned to direct the fluid into thermally intimate relationship with a said PTC pill.

11. The heater module of claims 8-10 wherein said second portion (74) comprises first and second indented sections (77), a said PTC pill being disposed in each of said indented sections (77), said module further comprising spring means (75), said spring means (75) bearing against said PTC pills and said second plate (80), said first (70) and second (80) plates being staked to said base member (20).

12. The heater module of claims 8-10 wherein each of said PTC pills is mounted to said second portion (74).

13. The heater module of claims 1 - 12 wherein said base member (20) further comprises weir means (50) spaced from said inlet (52) for maintaining a pre-established reservoir of fluid in said module.

14. The heater module of claim 13 wherein said heating means (12) is positioned in said reservoir.

15. The heater module of claims 1-13 wherein said base member (20) further comprises dam means (56) positioned in said first flow plenum (37) for splitting the flow of fluid into two streams, said dam (56) directing each of said streams to a said opening (76).

16. The heater module of claims 1-13 wherein said base member (20) and said end-cap (16) are composed of polymeric material.

17. A filter base assembly having a base member (20) having an inlet (36,52), an outlet (40), and first (24) and second (26) conduits in fluid communication with the inlet (36) and outlet (40), respectively, characterized by:
the base member (20) further comprising first flow distributor means (70) defining a first flow plenum (37), said first flow plenum (37) being in fluid communication with the inlet (36), said first flow distributor means (70) comprising opening means (76) for defining at least one opening, second flow distributor means (80) positioned relative to said first flow distributor means (70) to define a second flow plenum (66), said second flow plenum (66) being in fluid communication with said first flow plenum (37) via said opening means (76), heating means (12) for heating fluid traversing said second flow plenum (66), a cap (16) mounted on the base member (20), said cap (16) and said first (70) and second (80) flow distributor means defining a third flow plenum (64), said third flow plenum (64) being in fluid communication with said second flow plenum (66) and the first conduit (24); and
the filter base assembly further comprising a mounting module (90) having a plate (92) defining an aperture for receiving the first (24) and second (26) conduits, said base member (20) being mounted to said mounting module plate (92).

18. The filter base assembly of claim 17 wherein said base member (20) and end-cap (16) are composed of polymeric material.

19. The filter base assembly of claims 17 and 18 wherein said flow distributor means (70, 80) are composed of electrically and thermally conductive material.

20. The filter base assembly of claims 17-19 wherein said mounting module (90) is composed of cast metal.

21. The filter base assembly of claim 19 wherein said heating means (12) engages said first (70) and second (80) flow distributor means and transfers heat thereto, whereby said heating means (12) and said first (70) and second (80) flow distributor means transfer heat to the fluid.

22. The filter base assembly of claims 17-21 wherein said heating means (12) comprises a pair of PTC pills, each of said PTC pills comprising a ceramic material having a structure wherein said ceramic material is conductive of electricity below a predetermined threshold temperature and significantly less conductive of electricity above said threshold temperature.

23. The filter base assembly of claims 19-22 further comprising a thermal switch (14), said heating means (12), said thermal switch (14), and said first (70) and second (80) flow distributor means defining an electrical circuit for providing electrical power to said heating means (12), the thermal switch (14) comprising temperature sensor means for sensing the temperature of the surrounding fluid and switch means responsive to said sensor means for selectively switching states to control the temperature of the fluid.

24. The heater module of claims 22 and 23 wherein said first flow distributor means (70) comprises an upper first portion (72) and a lower second portion(74), said openings (76) being disposed in said second portion (74) and positioned to direct the fluid over said PTC pills.

25. The heater module of claim 23 wherein said base member (20) further comprises weir means (50) spaced at a distance from said inlet (52) for maintaining a pre-established reservoir of fluid in said base member (20) wherein said heating means (12) and said thermal switch (14) are positioned in said reservoir.

26. The heater module of claims 17-25 wherein there are two openings (76) and said base member (20) further comprises dam means (56) positioned in said first flow plenum (37) for splitting the flow of fluid into two streams, said dam means (56) directing each of said streams to a said opening (76).
